Europäisches Patentamt

European Patent Office

Office européen des brevets

(19)

(11) Numéro de publication: **0 209 190 B1**

## FASCICULE DE BREVET EUROPEEN

(12)

(45) Date de publication de fascicule du brevet: **08.04.92**  (51) Int. Cl.⁵: **G02F 1/29**, G02F 1/015

(21) Numéro de dépôt: **86201197.0**

(22) Date de dépôt: **08.07.86**

(54) **Elément de commutation optique entre deux guides de lumière et matrice de commutation optique formée de ces éléments de commutation.**

(30) Priorité: **11.07.85 FR 8510641**

(43) Date de publication de la demande:
**21.01.87 Bulletin 87/04**

(45) Mention de la délivrance du brevet:
**08.04.92 Bulletin 92/15**

(84) Etats contractants désignés:
**DE FR GB IT NL SE**

(56) Documents cités:
**EP-A- 0 147 195**

**JOURNAL OF THE JAPAN SOCIETY OF AP-PLIED PHYSICS, Supplement, vol. 44, 1975, pages 61-66, Tokyo, JP; K. TADA et al.: "A new light modulator using pertubation of synchronism between two coupled guides"**

**XEROX DISCLOSURE JOURNAL, vol. 1, no. 2, janvier-février 1977, page 49; T.M. HOLLADAY: "Integrated optics scanner"**

(73) Titulaire: **LABORATOIRES D'ELECTRONIQUE PHILIPS
3, Avenue Descartes
F-94450 Limeil-Brévannes(FR)**
(84) Etats contractants désignés:
**FR**

(73) Titulaire: **N.V. Philips' Gloeilampenfabrieken
Groenewoudseweg 1
NL-5621 BA Eindhoven(NL)**
(84) Etats contractants désignés:
**DE GB IT NL SE**

(72) Inventeur: **Erman, Marko
Société Civile S.P.I.D. 209 rue de l'Université
F-75007 Paris(FR)**
Inventeur: **Vodjdani, Nakita
Société Civile S.P.I.D. 209 rue de l'Université
F-75007 Paris(FR)**
Inventeur: **Theeten, Jean-Bernard
Société Civile S.P.I.D. 209 rue de l'Université
F-75007 Paris(FR)**

(74) Mandataire: **Landousy, Christian et al
Société Civile S.P.I.D. 156, Boulevard Haussmann
F-75008 Paris(FR)**

EP 0 209 190 B1

JOURNAL OF APPLIED PHYSICS, vol. 45, no. 11, novembre 1974, pages 4997-4999, American Institute of Physics, New York, US; F. AURACHER et al.: "New directional coupler for integrated optics"

SECOND EUROPEAN CONFERENCE ON INTE-GRATED OPTICS, IEE, Firenze, IT, 17-18 octobre 1983, pages 69-71, Londres, GB; J. BRANDON et al.: "Double-heterstructure GaAs-AlxGal-xAs rib waveguide directional coupler switch"

## Description

L'invention concerne un élément de commutation optique incluant deux guides de lumière parallèles sur une longueur dite longueur de couplage, dont les parois en regard sont séparées par une faible distance, dite distance de couplage, ces guides de lumière étant constitués chacun par un ruban en un matériau semiconducteur d'un premier indice de réfraction réalisé sur un substrat semiconducteur en un matériau d'un second indice de réfraction inférieur tel que la lumière est confinée dans le ruban formant le guide, les dimensions de ces guides étant telles qu'ils transportent chacun une onde monomode, et la commutation étant déclenchée par l'effet de potentiels auxquels sont portés des moyens de polarisation appliqués sur les guides, le ruban constituant l'un des guides dit premier guide de lumière étant réalisé en une première couche uniforme sur le substrat, le ruban constituant ce premier guide étant couvert par une couche uniforme d'un matériau semiconducteur compatible, dite couche intermédiaire, dont l'indice de réfraction est inférieur à celui des guides, dont l'épaisseur est appropriée à constituer la distance de couplage entre les deux guides de lumière, le ruban constituant l'autre guide dit second guide de lumière étant réalisé en une autre couche uniforme en surface de la couche intermédiaire, et par l'effet des potentiels auxquels sont portés les moyens de polarisation appliqués sur les guides, la lumière qui est introduite dans l'un des guides parallèlement à son axe optique à une première distance du substrat étant amenée à se propager dans l'autre guide parallèlement à l'axe optique de ce dernier à une seconde distance du substrat, l'ensemble du premier guide dit guide inférieur formant avec le second guide dit guide supérieur et avec la couche intermédiaire une structure dite première structure empilée dont la dimension longitudinale est égale à la longueur de couplage.

L'invention concerne en outre une matrice de commutation optique formée d'un nombre nxn de ces éléments de commutation.

L'invention trouve son application dans la commutation de signaux optiques transportés par fibres optiques, par exemple dans le domaine des télécommunications, domaine dans lequel la commutation entre de nombreuses fibres optiques doit être rendue possible pour éviter de devoir convertir les signaux optiques transportés par les fibres en signaux électriques lors de la commutation entre les différents abonnés.

Un élément de commutation tel que décrit dans le préambule est connu de la publication "Journal of the japan Society of Applied Physics, supplement Vol.44, 1975, p.61-66".

Ce document décrit un coupleur directionnel composé de deux (ou plus) guides de lumière parallèles disposés à une faible distance les uns des autres de manière à ce que la lumière qui se propage dans un des guides puisse être transférée dans le guide adjacent par couplage. Ce dispositif est destiné à la réalisation d'un modulateur. Le modulateur est formé de couches superposées. Les couches des guides possèdent un indice de réfraction $n_1$ qui est supérieur à celui de la couche intermédiaire et à celui des couches extrêmes, de manière à permettre le guidage. Une des couches extrêmes est de type de conductivité opposé au type de conductivité des autres couches, de manière à pouvoir faire varier l'indice du guide le plus proche, par l'application d'une tension de polarisation en inverse, portant un signal modulé. La longueur du dispositif est de préférence la longueur de couplage optique. Dans ces conditions, par l'application d'un signal non modulé à l'entrée du guide donton fait varier la constante de propagation, c'est-à-dire le guide le plus proche de la couche extrême de type de conductivité opposée, on obtient en sortie des deux guides une répartition de la puissance du signal modulé par le signal électrique appliqué sur les électrodes. Le dispositif est prévu pour véhiculer à la fois les modes TE et TM qui se comportent de manières différentes sous l'effet de la polarisation modulée.

Il est d'autre part connu de la demande de brevet EP-A-0 147 195 publiée le 3-07-1985, de réaliser des guides de lumière, présentant la forme de rubans formés de couches, sur un substrat. Les guides à rubans se coupent sur le substrat selon des angles déterminés. Des électrodes sont formées dans les régions de croisement, parallèlement à une diagonale de l'angle de croisement pour obtenir la commutation d'une direction vers une autre, par réflexion de la lumière sur le miroir formé dans la région où l'indice des guides est changé par injection des porteurs due aux électrodes. Les électrodes ont une dimension transversale non négligeable et le plan réflecteur n'est pas en coïncidence avec la diagonale de la région de croisement.

D'autre part la séparation des faisceaux se fait dans un seul plan parallèle au substrat.

Un élément de commutation optique apte à former une matrice de commutation, est aussi connu de la publication intitulée "Low-loss GaAs-Ga$_{1-x}$Al$_x$As double-heterostructure directional coupler" par A. Carenco, P. Sansonetti et alii dans "Technical Digest, Orlando Hyatt Hotel, Kissimee, Florida, April 24-26, 1984" sous la référence "Th a 4-1".

Ce document décrit un élément de commutation formé de deux guides de lumière constitués par des rubans en GaAs. Ces rubans sont parallèles et réalisés côte à côte en surface d'une couche de Ga$_{1-x}$Al$_x$As

qui sert de couche de confinement entre ces guides de lumière et le substrat plan en GaAs. Une autre couche de $Ga_{1-x}Al_xAs$ couvre chacun des rubans formant les guides. Ceux-ci sont d'autre part réalisés en relief sur le substrat par gravure d'une couche de départ. Des électrodes de type Schottky sont enfin réalisées en surface de chacun des guides, tandis que la face opposée du substrat est munie d'une couche formant un contact ohmique.

Les guides transportent chacun une onde monomode et, du fait de la petite distance qui les sépare latéralement, une polarisation appliquée sur l'un ou l'autre des guides permet de changer le couplage des deux guides monomodes, assurant ainsi la commutation souhaitée.

Une matrice de commutation peut être réalisée à partir des tels éléments de commutation en réunissant les guides d'un élément aux guides d'un autre élément par des tronçons de guide courbes.

Mais une telle structure présente plusieurs inconvénients. Tout d'abord, par distance de couplage entre les guides il faut entendre la distance latérale entre les rubans sur le substrat. Cette distance est un facteur extrêmement critique pour le comportement de l'élément de commutation. Or la distance latérale entre deux rubans semiconducteurs réalisés sur un plan est difficilement contrôlable et en tous les cas toujours grande. Dans le dispositif décrit dans le document cité, cette distance latérale de couplage est de l'ordre de 2 à 3$\mu$m. Comme la longueur de couplage, c'est-à-dire la dimension longitudinale des guides de lumière, est liée à la distance latérale de couplage, cette dimension longitudinale est dans ce cas de plusieurs mm, ce qui est réellement énorme en termes de dimensions de dispositifs intégrés.

De plus, les tronçons de guide courbes qui raccordent les éléments de commutation entre eux pour former une matrice, effectuent obligatoirement ce raccordement sous un angle faible, ce qui entraîne qu'une telle matrice occupe une très grande surface. D'autre part les procédés de gravure ou de croissance épitaxiale employés pour réaliser ces tronçons sont toujours anisotropes, ce qui entraînent que les parois externes de ces tronçons sont rugueuses ou présentent des marches provoquant des pertes dans ces tronçons.

Or, dans le domaine envisagé de l'application aux télécommunications, la demande est pour des circuits électrooptiques toujours plus performants, toujours plus miniaturisés, et toujours moins coûteux c'est-à-dire d'une réalisation plus aisée.

La présente invention permet de résoudre ces problèmes à l'aide d'un élément de commutation tel que défini dans le préambule, caractérisé en ce qu'un miroir plan, dit premier miroir, est placé sur le trajet du faisceau transporté par le second guide de lumière de la première structure empilée, perpendiculairement au substrat et faisant avec l'axe optique de ce second guide un angle différent de la normale, et en ce qu'un troisième guide de lumière formé par un ruban identique à celui qui forme le second guide, transporte le faisceau issu de ce second guide et réfléchi par le miroir à la même distance du substrat que le second guide.

Dans ces conditions, la couche intermédiaire peut être très mince. En effet le contrôle de dimensions de couches perpendiculairement au substrat est toujours beaucoup plus facile à réaliser que le contrôle des dimensions latérales, nécessaire pour la mise en oeuvre du dispositif connu de la troisième publication citée comme état de la technique. La distance de couplage entre les guides est alors très petite, ce qui entraîne que la longueur de couplage est aussi proportionnellement petite. Le dispositif réalisé selon la présente invention est donc très performant.

L'avantage présenté par cet élément est en outre que le miroir utilisé pour dévier le faisceau du second guide est à réflexion totale et donc que la séparation des chemins suivis par les faisceaux issus de l'élément de commutation se fait sans pertes.

Cet élément de commutation peut encore être caractérisé en ce qu'un quatrième guide de lumière forme avec une couche intermédiaire et le troisième guide de lumière une structure dite seconde structure empilée et dans laquelle le quatrième guide est dit guide inférieur et le troisième guide est dit guide supérieur, en ce que cette seconde structure est munie de moyens de polarisation identiques à ceux de la première structure empilée, et en ce qu'un miroir plan, dit second miroir, parallèle au premier miroir et de structure identique, est placé sur le trajet du faisceau du guide supérieur de la seconde structure empilée, à l'extrémité de cette structure.

Dans une forme de réalisation, cet élément de commutation est caractérisé en ce que les couches formant les guides et chacune des couches intermédiaires sont des couches épitaxiales formées à partir d'un substrat monocristallin.

Dans cette forme de réalisation, la mise en oeuvre de l'élément de commutation selon l'invention est particulièrement aisée, car l'épaisseur des couches épitaxiales est facilement contrôlable.

D'autre part, comme il a été vu lors de l'étude de l'état de la technique, tous les procédés de réalisation qui s'appliquent aux dispositifs semiconducteurs sont plus ou moins anisotropes. Dans une autre forme de réalisation, il est donc avantageux d'utiliser cette propriété pour faire en sorte que les faces longitudinales des guides et les miroirs soient des faces cristallographiques ; la lumière est alors particulièrement bien confinée dans les guides de lumière et les pertes sont particulièrement faibles.

Un élément de commutation selon l'invention, lorsqu'il inclut une première et une seconde structure empilée, et un premier et un second miroir, est alors particulièrement avantageux pour réaliser une matrice de commutation à n entrées et n sorties, comprenant un nombre nxn de ces éléments de commutation juxtaposés.

Cette matrice offre alors l'avantage d'être d'une faible surface et d'une réalisation aisée. De plus elle assure une commutation du type large bande qui ne pourrait être obtenue à l'aide d'une commutation purement électrique.

L'invention sera mieux comprise à l'aide de la description suivante illustrée par les figures annexées dont :

- la figure 1a qui représente vu du dessus un élément de commutation selon l'invention
- la figure 1b qui représente en coupe selon l'axe z'o cet élément de commutation ;
- la figure 1c qui représente en coupe selon l'axe oz cet élément de commutation.
- la figure 1d qui représente, en coupe transversale, une structure empilée ;
- les figures 2a, 2b, 2c, 2d qui représentent, dans différentes mises en oeuvre de l'élément de commutation, une coupe transversale d'une structure empilée ;
- la figure 3 qui représente un exemple de matrice de commutation réalisée à l'aide de 4x4 de ces éléments de commutation ;
- l'ensemble des figures 4 qui illustrent les différentes étapes d'un procédé de réalisation d'un élément de commutation selon l'invention.

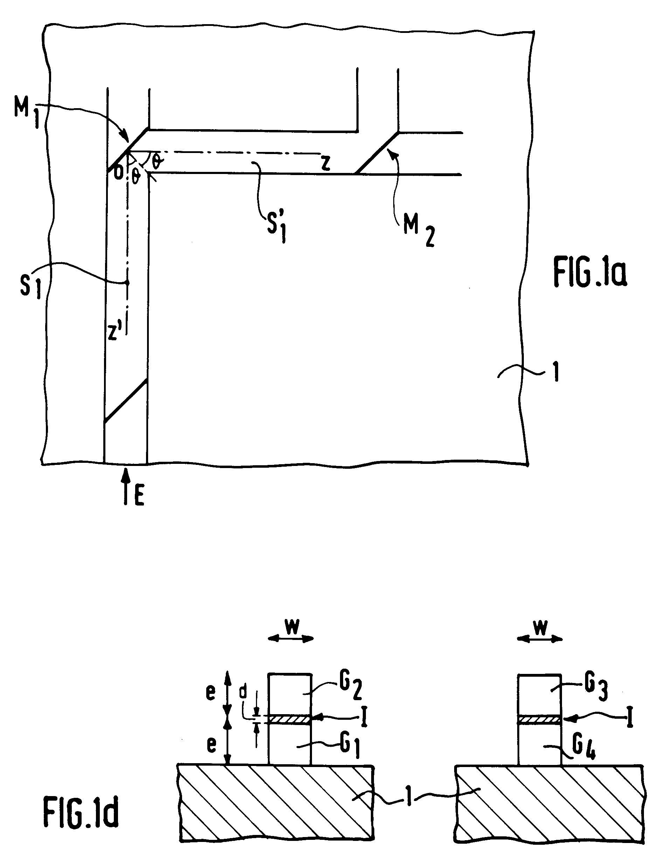

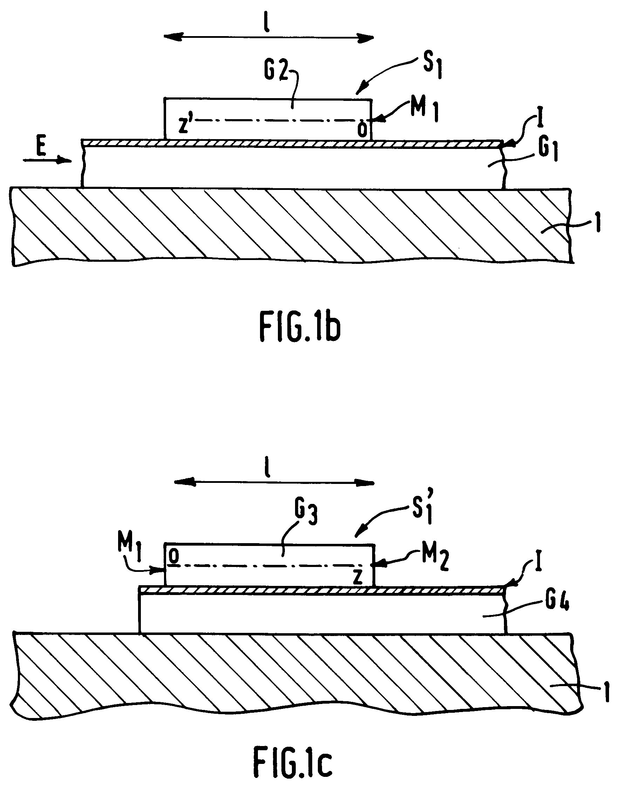

Tel que représenté vu du dessus, sur la figure 1a, et en coupe respectivement selon les axes z'o et oz sur les figures 1b et 1c, l'élément de commutation selon l'invention est formé d'un premier ruban semiconducteur formant un premier guide de lumière $G_1$ réalisé en surface d'un substrat plan 1 en un matériau semiconducteur compatible, dont l'indice de réfraction $n_S$ est inférieur à l'indice $n_g$ du matériau formant le premier guide $G_1$.

L'élément de commutation est ensuite formé d'une couche I, dite couche intermédiaire, en un matériau semiconducteur d'indice de réfraction $n_i$ inférieur à l'indice du matériau formant le guide, réalisée en surface de ce dernier. Cette couche est de faible épaisseur d. Elle est destinée à permettre le couplage entre le premier guide de lumière $G_1$ et un second guide de lumière $G_2$ constitué par un second ruban de matériau semiconducteur de même nature que celui qui constitue le premier guide $G_1$.

La section des guides de lumière $G_1$ et $G_2$ peut être rectangulaire. Dans ce cas les guides présentent perpendiculairement au substrat une dimension e, et parallèlement au substrat une dimension e, et parallèlement au substrat une dimension w, comme il est montré en coupe transversale sur la figure 1d.

Ces guides sont prévus pour transporter des ondes monomodes. Leur dimension e perpendiculairement au substrat est donnée par la relation :

$$0 < e^2 < \frac{m_S^2 \, \lambda_o^2}{4(n_g^2 - n_S^2)} \qquad (1)$$

dans laquelle $m_S = 1$, constante qui correspond au mode d'ordre premier, et $\lambda_o$ est la longueur d'onde de propagation.

Cette relation exprime le fait que cette dimension e doit être suffisante pour que le guide transporte le mode fondamental, mais cependant limitée, afin d'éviter la propagation du mode d'ordre premier qui lui est supérieur. Cette relation est connue de la publication "Integrated Optics : Theory and Technology" par Robert G. Hunsperger aux éditions Springer-Verlag Berlin, Heidelberg, New-York.

La structure représentée figure 1d, formée par l'empilement sur le substrat du ruban semiconducteur constituant le premier guide $G_1$, de la couche intermédiaire I, et du ruban semiconducteur constituant le second guide $G_2$, est dite structure empilée. Elle est fondamentalement différente de la structure selon l'art antérieur où les deux guides parallèles reposaient sur la même surface du substrat et où le couplage était latéral.

En imposant, par des moyens de polarisation qui seront décrits plus loin, une différence de potentiel sur les guides $G_1$ et $G_2$, on crée un champ électrique important au niveau de l'un des guides. Ce champ permet, par effet électro-optique linéaire, de modifier l'indice du guide dans la région où la polarisation est appliquée et d'induire dans ce guide une différence d'indice :

$$\Delta n_g = n_g \times r \times E$$

où r est une constante électro-optique du matériau et $\vec{E}$ est le champ électrique. Ainsi, suivant la polarisation appliquée sur les guides de la structure empilée, un faisceau lumineux de longueur d'onde $\lambda_o$ introduit dans le premier guide de lumière $G_1$, ou bien continue son trajet dans le guide $G_1$, ou bien passe dans le guide $G_2$.

La longueur $\ell$ de la structure empilée, nécessaire au couplage des guides $G_1$ et $G_2$ est fonction d'une part de l'indice $n_i$ de la couche intermédiaire I, mais aussi de son épaisseur d.

Selon l'art antérieur cité précédemment, les guides de lumière réalisés en surface d'un substrat étaient séparés par une distance d'environ $3\mu m$. Dans ces conditions, la longueur de couplage variait de 4 à 8 mm, suivant le procédé de réalisation utilisé.

Au contraire, selon la présente invention, la couche intermédiaire, qui peut être une couche épitaxiale par exemple, est d'une épaisseur très facilement contrôlable. Une épaisseur extrêmement uniforme et aussi faible que $0,5\mu m$ peut être facilement obtenue. Avec une telle épaisseur, l'ordre de grandeur de la longueur $\ell$ de couplage pour un matériau semiconducteur du groupe III-V, sera de l'ordre de $\ell \simeq 1mm$.

On évalue immédiatement combien le dispositif selon l'invention est avantageux dans le domaine de l'électro-optique intégrée où la demande est pour des dispositifs toujours petits miniaturisés.

Tel que représenté sur les figures 1, la structure empilée $S_1$ constitue donc un élément de commutation entre les guides $G_1$ et $G_2$.

Afin de diriger le faisceau transporté par le guide $G_2$ vers une direction différente du faisceau transporté par le guide $G_2$, un miroir plan $M_1$ est placé sur le trajet du faisceau du guide $G_2$, à l'extrémité de la première structure empilée $S_1$.

Ce miroir $M_1$ est constitué par une portion plane de la paroi latérale du guide $G_2$, cette portion plane étant perpendiculaire au substrat et faisant un angle $\theta$ par rapport à l'axe optique z'o du guide $G_2$. Ce miroir $M_1$ réfléchit donc le faisceau transporté par le guide $G_2$ sous un angle $2\theta$.

Comme il est montré sur les figures 1a et 1c, cette dernière étant une coupe du dispositif de la figure 1a selon l'axe oz de réflexion par le miroir $M_1$, le faisceau réfléchi par $M_1$ peut être transporté par un troisième guide de lumière $G_3$, de même dimension et composition que le guide $G_2$.

D'autre part, dans le but d'appliquer un tel élément de commutation à la réalisation d'une matrice de commutation, un quatrième guide $G_4$ peut encore être associé au guide $G_3$ avec une couche intermédiaire I, pour former une structure empilée $S'_1$ identique à la première structure $S_1$.

Cette seconde structure empilée $S'_1$ sera en outre munie de moyens de polarisation identiques à ceux de la première structure empilée $S_1$, ainsi que d'un miroir $M_2$, de structure identique au miroir $M_1$, parallèle à ce dernier et placé sur le trajet du faisceau transporté par le guide $G_3$ comme il est montré figure 1a et 1c.

Dans ce qui suit, les guides $G_1$ et $G_4$ des structures empilées $S_1$ et $S'_1$ seront dits guides inférieurs, tandis que les guides $G_2$ et $G_3$ seront dits guides supérieurs (figure 1d).

Ainsi par l'effet des polarisations appliquées sur les structures empilées $S_1$ et $S'_1$, il est possible, à partir d'un faisceau monomode appliqué sur l'entrée E du guide inférieur de la structure $S_1$, de disposer :
- ou bien d'un faisceau monomode qui continue son trajet dans le guide inférieur de la première structure $S_1$ ;
- ou bien d'un faisceau monomode qui se propage dans le guide supérieur de la première structure $S_1$, est réfléchi par le premier miroir $M_1$ et continue son chemin dans le guide supérieur de la seconde structure $S'_1$.

Ce dernier faisceau peut alors, par effet des polarisations :
- ou bien être réfléchi par le second miroir $M_2$ ;
- ou bien passer dans le guide inférieur de la seconde structure $S'_1$.

A partir de l'élément de commutation formé par les deux structures empilées $S_1$ et $S'_1$, il peut être réalisé une matrice de commutation optique comportant un nombre n d'entrées $IN_1$, $IN_2$,... $IN_n$, et un nombre n de sorties $O_1$, $O_2$,... $O_n$, entre lesquelles s'opère la commutation.

Cette matrice est formée de nxn de ces éléments de commutation juxtaposés et placés de telle sorte que les colonnes de la matrice, définies comme étant dans le prolongement des entrées $IN_1$, $IN_2$,... $IN_n$, sont formées par lesdites premières structures empilées des éléments, numérotées dans ce cas respective-ment $S_{11}$, $S_{12}$, $S_{13}$,...$S_{1n}$ pour la première colonne, $S_{21}$, $S_{22}$, $S_{23}$...etc pour la seconde colonne et ainsi de suite jusqu'à $S_{n1}$, $S_{n2}$... pour la $n^{ième}$ colonne. Ces premières structures empilées sont elles-mêmes placées les unes par rapport aux autres de telle sorte que les guides inférieurs sont dans le prolongement les uns des autres.

EP 0 209 190 B1

D'autre part, les lignes de la matrice, définies comme étant dans le prolongement des sorties $O_1$, $O_2$,...$O_n$ sont formées par lesdites secondes structures empilées des éléments, numérotées dans ce cas respectivement $S'_{11}$, $S'_{12}$,... $S'_{1n}$ pour la première ligne, $S'_{21}$, $S'_{22}$...$S'_{2n}$ pour la seconde ligne et ainsi de suite jusqu'à $S'_{n1}$... $S'_{nn}$ pour la dernière ligne. Ces secondes structures empilées sont en outre placées les unes par rapport aux autres de telle sorte que les guides inférieurs sont dans le prolongement les uns des autres.

Enfin ces éléments sont juxtaposés de telle sorte que le premier miroir d'un élément forme avec le second miroir d'un élément adjacent, une lame à faces parallèles dont les faces externes sont totalement réfléchissante.

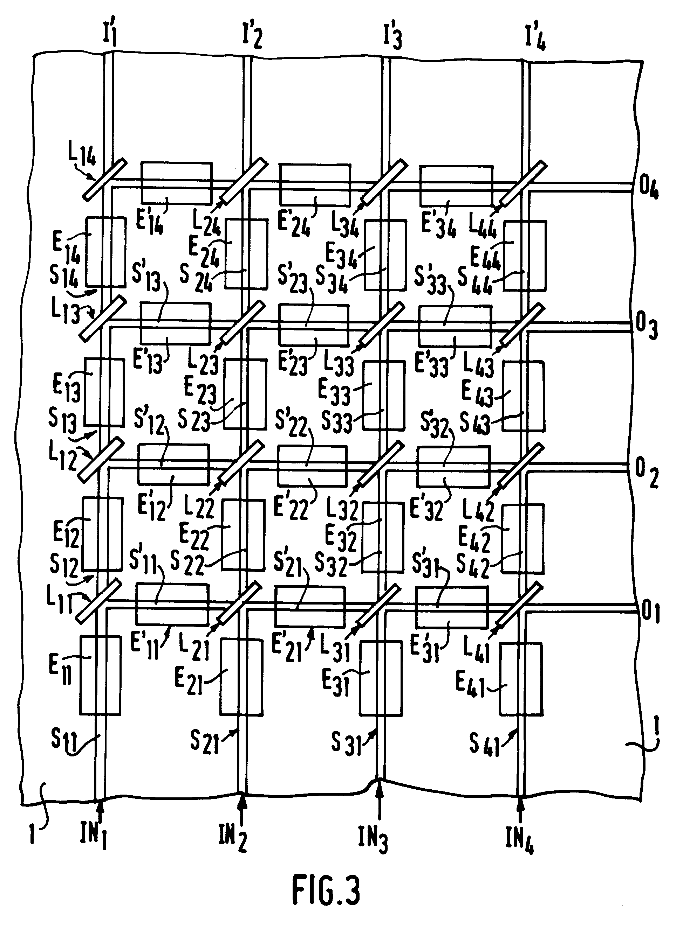

Une matrice de commutation réalisée selon ce modèle et comportant quatre entrées et quatre sorties est représentée figure 3. Ces lames à faces parallèles sont alors numérotées $L_{11}$...$L_{nn}$.

Les moyens de polarisation de chaque structure empilée sont notés sur la figure 3 par la référence E affectée du même indice que la structure empilée à laquelle ils sont appliqués.

Pour réaliser les éléments de commutation selon l'invention, ou matrices formées à partir de ces éléments, il est avantageux de choisir un matériau semiconducteur du groupe III-V, car ce matériau permet la propagation des ondes aux longueurs d'onde $1,3\mu m$ et $1,55\mu m$ envisagées pour les applications dans le domaine des télécommunications.

Quatre formes de réalisation d'éléments de commutation incluant de tels matériaux sont données ici à titre d'exemple.

Exemple I

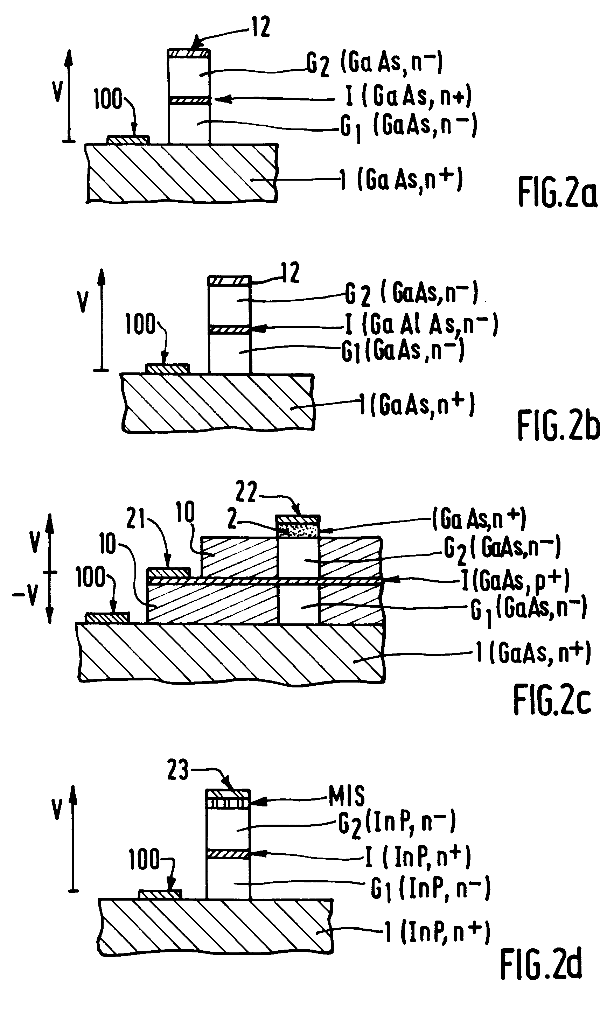

Dans cette forme de réalisation illustrée par la figure 2a, le substrat 1 peut être en arséniure de gallium (GaAs) de type $n^+$, ainsi que la (ou les) couche(s) intermédiaire(s) I. Les guides inférieurs et supérieurs ($G_1$ et $G_2$ par exemple) sont en arséniure de gallium (GaAs) de type $n^-$. En effet l'arséniure de gallium de type $n^-$ présente un indice de réfraction de valeur supérieure à celui de l'arséniure de gallium de type $n^+$, ce qui permet d'obtenir le confinement de la lumière dans les guides.

Les moyens de polarisation, pour chaque structure empilée ainsi constituée, sont formés par une première électrode 12 de type Schottky dont le contact est pris sur le guide supérieur et d'une second électrode de type contact ohmique 100 pris sur le substrat 1.

La commutation de l'un à l'autre des guides de la structure empilée est obtenue en appliquant une différence de potentiel V entre le première électrode 12 et le contact ohmique 100 pris sur le substrat.

Exemple II

Dans cette forme de réalisation illustré par la figure 2b, le substrat 1 peut être en arséniure de gallium (GaAs) de type $n^+$, les guides inférieur et supérieur ($G_1$ et $G_2$ par exemple) peuvent être en arséniure de gallium (GaAs) de type $n^-$ et la (ou les) couche(s) intermédiaire(s) I peuvent être en arséniure de gallium et d'aluminium (GaAlAs) de type $n^-$.

Les moyens de polarisation, pour chaque structure empilée ainsi constituée, sont formés par une première électrode 100 de type contact ohmique pris sur le substrat 1, ou bien sur la couche intermédiaire I, et par une seconde électrode 12 de type Schottky dont le contact est pris sur le guide supérieur.

Le commutation de l'un à l'autre des guides de la structure empilée est obtenue en appliquant une différence de potentiel V entre les électrodes 100 et 12.

Exemple III

Dans cette forme de réalisation illustré par la figure 2c, le substrat 1 peut être en arséniure de gallium (GaAs) de type $n^+$, les guides peuvent être en arséniure de gallium (GaAs) de type $n^-$, la couche intermédiaire peut etre choisie parmi l'arséniure de gallium (GaAs) de type $p^+$, ou l'arséniure de gallium et d'aluminium (GaAlAs) de type $p^+$, l'utilisation de ce dernier matériau diminuant les pertes optiques. Une couche d'un tel matériau peut également être interposée entre le substrat (alors semi-isolant) et le guide inférieur.

Dans ces conditions le guide supérieur est encore surmonté d'une couche 2 d'arséniure de gallium (GaAs) de type $n^+$.

De plus dans le but de confiner la lumière et de rendre le dispositif symétrique, les guides peuvent être enterrés dans un matériau 10 tel que l'arséniure de gallium et d'aluminium de type $n^-$.

Les moyens de polarisation, pour chaque structure empilée ainsi constituée, sont formés par une

7

EP 0 209 190 B1

première électrode 21 de type contact pris sur la couche intermédiaire I, par une seconde électrode 100 de type contact ohmique pris sur le substrat, et par une troisième électrode 22, de type contact ohmique pris sur la couche supérieure 2 d'arséniure de gallium de type n$^+$.

La commutation de l'un à l'autre des guides de la structure empilée est obtenue en portant la première électrode 21 dont le contact est pris sur la couche intermédiaire à un potentiel de référence, et en appliquant des différences de potentiel symétriques entre la seconde et la première électrode d'une part respectivement 100 et 21, ou bien entre la troisième et la première électrode d'autre part, respectivement 22 et 21, suivant le sens de la commutation désirée.

Exemple IV

Dans cette forme de réalisation illustrée par la figure 2d, le substrat 1 peut être en phosphure d'indium (InP) de type n$^+$, de même que la (ou les) couche(s) intermédiaire(s) I. Les guides inférieurs et supérieurs peuvent être en phosphure d'indium (InP) de type n$^-$.

Les moyens de commutation, pour chaque structure empilée ainsi constituée, sont formés par un contact ohmique 100 pris sur la couche intermédiaire I ou bien sur le substrat, et par un contact 23 de type MIS (Métal-Isolant-Semiconducteur).

La commutation de l'un à l'autre des guides de la structure empilée est obtenue en appliquant une différence de potentiel V entre les électrodes 100 et 23.

Procédé de réalisation d'un élément de commutation ou d'une matrice composée de tels éléments

D'une façon avantageuse, les couches constituant l'élément de commutation selon l'invention seront des couches épitaxiales formées à partir d'un substrat monocristallin. En effet de telles couches sont d'une réalisation aisée, et de plus leur dimension perpendiculairement au substrat est facilement contrôlable. En particulier, il est aisé d'obtenir une distance de couplage d concrétisée par l'épaisseur de la couche intermédiaire I, telle qu'elle est très faible de l'ordre de 0,5$\mu$m comme il a été dit précédemment.

D'une façon encore plus avantageuse, l'élément de commutation ou la matrice sera réalisé à partir d'un procédé mettant en oeuvre la gravure anisotrope, associée à la croissance épitaxiale anisotrope localisée, selon des directions cristallographiques privilégiées du substrat monocristallin.

En effet comme il a été vu lors de l'étude de l'état de la technique, tous les procédés de réalisation qui s'appliquent aux dispositifs semiconducteurs sont plus ou moins anisotropes. Il est donc particulièrement avantageux d'utiliser cette propriété pour faire en sorte que les guides de lumière et les miroirs ou lames à faces parallèles réfléchissantes soient des facettes cristallographiques. La lumière est alors mieux confinée dans les guides ou mieux réfléchie par les miroirs.

L'ensemble des dispositifs selon l'invention est de préférence réalisé à partir de guides de lumière enterrés dans le substrat. En effet ces guides sont monomodes perpendiculairement au substrat. Mais ils sont aussi monomodes parallèlement au substrat. Cet effet est plus facilement obtenu si un matériau de même nature que le substrat vient noyer les faces latérales des guides de lumière.

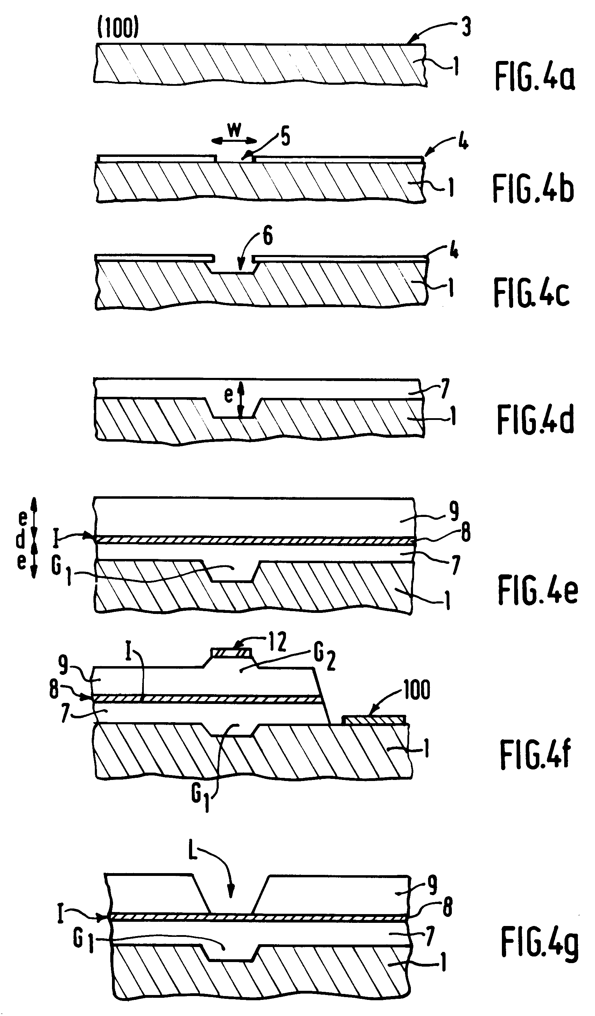

Les différentes figures 4 illustrent un procédé de réalisation qui remplit ces conditions et qui est conforme à l'exemple I.

Ce procédé comprend les étapes de :

a) formation d'un substrat 1 monocristallin en arséniure de gallium (GaAs) de type n$^+$, dopé par exemple à 6.10$^{17}$ porteurs par cm$^3$ et présentant une face plane 3 orientée selon le plan cristallographique (100) (figure 4a) ;

b) délimitation par un masque 4 de sillons 5 de largeur w selon les axes cristallographiques [110] et [1$\bar{1}$0] perpendiculaires sur les emplacements prévus pour les structures empilées S$_1$ et S'$_1$. Ce masque peut être en silice (SiO$_2$) et la largeur w des sillons peut être de 3 à 4$\mu$m. La surface (100) du substrat 1 est donc dégagée dans ces sillons (figure 4b) ;

c) gravure du substrat dans les sillons par une méthode chimique ou bien par une méthode dite RIE (Reactive Ion Etching) par exemple. Cette méthode présente sur les autres méthodes l'avantage de former des flancs de gravure bien perpendiculaires au substrat et dénués de sous-gravure du masque. On obtient ainsi dans les sillons 5 des cannelures 6 en creux dans le substrat (figure 4c). Ces cannelures 6 sont réalisées sur une faible profondeur, par exemple 0,5$\mu$m. Elimination du masque 4.

d) introduction de l'échantillon ainsi préparé dans un réacteur d'épitaxie en phase vapeur et léger décapage "in situ" pour mieux faire apparaître les faces cristallines développées dans les cannelures par RIE. On notera en effet que selon les conditions thermodynamiques, le réacteur d'épitaxie peut permettre un décapage ou bien une croissance épitaxiale. Les faces longitudinales des cannelures sont

8

des faces (110) et (1$\bar{1}$0).

e) croissance épitaxiale de préférence en phase vapeur, à partir des faces cristallographiques des cannelures d'une couche 7 du matériau constituant les guides inférieurs, par exemple dans la mise en oeuvre décrite ici, l'arséniure de gallium de type n$^-$ dopé par exemple à un niveau de porteur inférieur à $10^{15}$ par cm$^3$, cette couche couvrant à la fois le substrat et la cannelure 6 d'une façon plane. L'épaisseur de la couche dans la région de la cannelure est e (figure 4d) ;

f) croissance épitaxiale de préférence en phase vapeur, sur la couche 7, d'une couche 8 plane du matériau constituant la couche intermédiaire I, ici l'arséniure de gallium du type n$^+$ d'épaisseur d par exemple 0,5$\mu$m, puis croissance épitaxiale de préférence en phase vapeur, sur la couche 8, d'une couche 9 d'épaisseur e du matériau constituant les guides pour former le guide supérieur, suivant la structure illustrée par la figure 4e ;

g) gravure par exemple par RIE, dans l'ouverture d'un nouveau masque, de la dernière couche 9, sur une petite épaisseur, de manière à faire apparaître en relief les guides supérieurs comme il est montré sur la figure 4f ;

h) gravure par exemple par RIE dans les ouvertures d'un nouveau masque de cannelures dont les faces constituent ou bien les miroirs dans le cas d'un élément de commutation ou bien les lames à faces parallèles réfléchissantes dans le cas d'une matrice (figure 4g) ;

i) réalisation des électrodes en surface des guides supérieurs et d'un contact ohmique dans une ouverture pratiquée dans les couches jusqu'à la surface du substrat (figure 4f). Dans un autre exemple de réalisation (exemple III) il faudrait en outre réaliser des contacts ohmiques sur la couche intermédiaire dans les ouvertures pratiquées dans les couches jusqu'à cette dernière, à proximité des structures empilées.

En ce qui concerne la réalisation des guides de lumière par épitaxie localisée on se reportera avec profit à l'article intitulé "Structural analysis and optical characterization of low loss GaAs waveguides fabricated by selective epitaxy" par N. VODJDANI, M. ERMAN et J.B. THEETEN dans "Journal of Crystal Growth 71 (1985) 141-148, North Holland, Amsterdam".

A titre d'exemple également sont donnés ici les fourchettes pour la dimension des guides de lumière perpendiculairement au substrat.

Avec un indice $n_g \simeq$ 3,5 correspondant à un substrat en arséniure de gallium dopé à $6.10^{17}$ porteurs par cm$^3$ (type n$^+$), une différence entre les indices

$n_g$-$n_S \simeq 10^{-3}$ et une longueur d'onde $\lambda_o \simeq$ 1,3$\mu$m alors 0 < e < 7,5$\mu$m

L'épaisseur des lames à faces parallèles L (ou distance qui sépare deux miroirs plans H formant ces lames) peut être de l'ordre de 1$\mu$m.

La longueur $\ell$ de couplage est comme on l'a vu précédemment de l'ordre de 1 mm pour une épaisseur de la couche intermédiaire

$$d \simeq 0,5\mu m$$

La gravure propre à constituer les lames L ou les miroirs est évidemment faite sur une profondeur de l'ordre de e.

Les électrodes constituant les moyens de polarisation peuvent toutes être réalisées sur la même face 3 du substrat 1 que le dispositif, même lorsqu'un contact ohmique destiné à recevoir le potentiel de référence est pris sur le substrat.

A cet effet une ouverture est dégagée dans les couches supérieures jusqu'à laisser apparaître la couche ou le substrat sur laquelle ou lequel doit être réalisé l'électrode. L'électrode est alors réalisée dans cette ouverture qui est par ailleurs mise en place à proximité de la structure empilée qui doit être ainsi polarisée.

D'une façon générale, les contacts de type ohmique pourront être réalisés à l'aide d'un alliage Or-Germanium-Nickel (Au-Ge-Ni), et les électrodes de type Schottky par un dépôt de Titane-Platine-Or (Ti-Pt-Au).

Il est évident que d'autres formes et procédés de réalisation des dispositifs selon l'invention sont possibles sans sortir du cadre de l'invention tel que défini par les revendications ci-après annexées.

**Revendications**

1. Elément de commutation optique incluant deux guides de lumière parallèles ($G_1$, $G_2$) sur une longueur dite longueur de couplage (l), dont les parois en regard sont séparées par une faible distance (d), dite distance de couplage, ces guides de lumière ($G_1$, $G_2$) étant constitués chacun par un ruban en un matériau semiconducteur d'un premier indice de réfraction ($n_g$) réalisé sur un substrat semiconducteur (1) en un matériau d'un second indice de réfraction ($n_s$) inférieur tel que la lumière est confinée dans le ruban formant le guide, les dimensions de ces guides étant telles qu'ils transportent chacun une onde monomode, et la commutation étant déclenchée par l'effet de potentiels auxquels sont portés des moyens de polarisation appliqués sur les guides, le ruban constituant l'un des guides dit premier guide de lumière ($G_1$) étant réalisé en une première couche uniforme sur le substrat (1), le ruban constituant ce premier guide ($G_1$) étant couvert par une couche uniforme d'un matériau semiconducteur compatible, dite couche intermédiaire (I), dont l'indice de réfraction est inférieur à celui des guides, dont l'épaisseur est appropriée à constituer la distance de couplage entre les deux guides de lumière, le ruban constituant l'autre guide dit second guide de lumière ($G_2$) étant réalisé en une autre couche uniforme en surface de la couche intermédiaire (I), et par l'effet des potentiels auxquels sont portés les moyens de polarisation appliqués sur les guides, la lumière qui est introduite dans l'un des guides parallèlement à son axe optique à une première distance du substrat étant amenée à se propager dans l'autre guide parallèlement à l'axe optique de ce dernier à une seconde distance du substrat, l'ensemble du premier guide ($G_1$) dit guide inférieur formant avec le second guide ($G_2$) dit guide supérieur et avec la couche intermédiaire (I) une structure dite première structure empilée ($S_1$) dont a dimension longitudinale est égale à la longueur de couplage (l), caractérisé en ce qu'un miroir plan ($M_1$) dit premier miroir est placé sur le trajet du faisceau transporté par le second guide ($G_2$) de lumière de ladite première structure empilée ($S_1$) à l'extrémité de cette structure, perpendiculairement au substrat et faisant avec l'axe optique de ce second guide un angle différent de la normale, et en ce qu'un troisième guide ($G_3$) de lumière formé par un ruban identique à celui qui forme le second guide, transporte le faisceau issu de ce second guide et réfléchi par le miroir, à la même distance du substrat que ce second guide.

2. Elément de commutation selon la revendication 1, caractérisé en ce qu'un quatrième guide ($G_4$) de lumière forme avec une couche intermédiaire (I) et le troisième guide ($G_3$) de lumière une structure dite seconde structure empilée, ($S_1$') identique à la première structure empilée ($S_1$) et dans laquelle le quatrième guide ($G_4$) est dit guide inférieur et le troisième guide ($G_3$) est dit guide supérieur, et en ce que cette seconde structure empilée ($S_1$') est munie de moyens de polarisation identiques à ceux de la première structure empilée ($S_1$).

3. Elément de commutation selon la revendication 2, caractérisé en ce qu'un miroir plan ($M_2$), dit second miroir, parallèle au premier miroir ($M_1$) et de structure identique, est placé sur le trajet du faisceau du guide supérieur ($G_3$) de la seconde structure empilée ($S_1$'), a l'extrémité de cette structure.

4. Elément de commutation selon la revendication 3, caractérisé en ce que les couches (7, 9) formant les guides et chacune des couches (8) intermédiaires sont des couches épitaxiales formées à partir d'un substrat (1) monocristallin.

5. Elément de commutation selon la revendication 4, caractérisé en ce que le plan du substrat sur lequel sont réalisés les guides est le plan (100), en ce que les guides sont réalisés parallèlement aux axes cristallographiques [110] ou [1$\bar{1}$0], et en ce que chacun des miroirs ($M_1$, $M_2$) est réalisé selon une face cristallographique (010) ou (001).

6. Elément de commutation selon la revendication 5, caractérisé en ce qu'il est réalisé, à partir du plan du substrat (1), par gravure de cannelures (6) de la profondeur de chacune des structures empilées, sur l'emplacement de celles-ci, puis par croissance épitaxiale des couches (7, 8, 9) formant l'empilement dans les cannelures (6) suivie d'une gravure d'une de cannelures (6) de la profondeur (e) du premier guide ($G_1$) de manière telle que les faces latérales de ces cannelures (6) constituent les faces des miroirs ($M_1$, $M_2$), etant orientées selon l'angle approprié par rapport à l'axe optique des guides.

7. Elément de commutation selon l'une des revendications 3 à 6, caractérisé en ce que le substrat est en arséniure de gallium (GaAs) de type n$^+$, ainsi que chacune des couches intermédiaires (I), en ce que les guides ($G_1$, $G_2$, $G_3$, $G_4$) sont en arséniure de gallium (GaAs) de type n$^-$, et en ce que les moyens de polarisation sont constitués pour chacune des structures empilées ($S_1$, $S_1$') par une première électrode (12) de type Schottky dont le contact est pris sur le guide supérieur et par une électrode (100) de type contact ohmique pris sur le substrat (1) ou sur la couche intermédiaire (I); une différence de potentiel étant alors appliquée entre cette électrode (12) et type Schottky et ce contact ohmique (100).

8. Elément de commutation selon l'une des revendications 3 à 6, caractérisé en ce que le substrat est en arséniure de gallium (GaAs) de type $n^+$, en ce que les guides ($G_1$, $G_2$, $G_3$, $G_4$) sont en arséniure de gallium (GaAs) de type $n^-$ et chacune des couches intermédiaires (I) est en arséniure de gallium et d'aluminium (GaAlAs) de type $n^-$, et en ce que les moyens de polarisation sont constitués, pour chacune des structures empilées, par une première électro (100) de type contact ohmique pris sur le substrat, et par une seconde électrode (12) de type Schottky dont le contact est pris sur le guide supérieur, une différence de potentiel étant appliquée entre ces deux électrodes.

9. Elément de commutation selon l'une des revendications 3 à 6, caractérisé en ce que le substrat (1) est en arséniure de gallium (GaAs) de type $n^+$, les guides sont en arséniure de gallium (GaAs) de type $n^-$, la couche intermédiaire (I) est en arséniure de gallium (GaAs) de type $p^+$, en ce que le guide supérieur ($G_{12}$) est encore surmonté d'une couche (2) d'arséniure de gallium (GaAs) de type $n^+$, et en ce que les moyens de polarisation sont constitués, pour chacune des structures empilées, par une première électrode (21) de type contact ohmique pris sur la couche intermédiaire (I) et portée à un potentiel de référence, par une seconde électrode (100) de type contact ohmique pris sur le substrat (1), et par une troisième électrode (22) de type contact ohmique pris dans la couche (2) supérieure d'arséniure de gallium de type $n^+$, des différences de potentiel symétriques étant appliquées entre la seconde (100) et la première électrode (21) d'une part, ou entre la troisième (22) et la première électrode (21) d'autre part, suivant le sens de la commutation désirée.

10. Elément de commutation selon l'une des revendications 3 à 6, caractérisé en ce que le substrat (1) est en phosphure d'indium (InP) de type $n^+$, ainsi que chacune des couches intermédiaires, en ce que les guides sont en phosphure d'indium (InP) de type $n^-$, et en ce que les moyens de polarisation sont constitués, pour chacune des structures empilées, par un contact ohmique (100; 21) pris sur la couche intermédiaire (I) ou le substrat (1) et d'un contact (23) de type MIS (Métal-Isolant-Semiconducteur), une différence de potentiel étant appliquée entre ces deux électrodes.

11. Matrice de commutation optique comportant un nombre n d'entrées $IN_1$, $IN_2$,... $IN_n$, et un nombre n de sorties $O_1$, $O_2$,...$O_n$, entre lesquelles s'opère la commutation, caractérisé en ce qu'elle est formée de nxn éléments de commutation ($S_1$, $S_1'$) selon l'une des revendications 3 à 10, et en ce que ces éléments sont juxtaposés de telle manière que les colonnes de la matrice, dans le prolongement de ses entrées $IN_1$, $I_2$,...$IN_n$, sont formées par lesdites premières structures ($S_{11}$, $S_{12}$,...$S_{1n}$, $S_{21}$... $S_{2n}$,..., $S_{n1}$, $S_{n2}$,... $S_{nn}$) des éléments dont les guides inférieurs sont dans le prolongement les uns des autres, et de telle manière que les lignes de la matrice, dans le prolongement de ses sorties $O_1$. $O_2$,... On, sont formées par lesdites secondes structures ($S'_{11}$, $S'_{12}$,... $S'_{1n}$, $S'_{21}$...$S'_{2n}$,...., $S'_{n1}$, $S'_{n2}$... $S'_{nn}$) des éléments dont les guides inférieurs sont dans le prolongement les uns des autres, ledit premier miroir d'un élément formant avec ledit second miroir d'un autre élément juxtaposé une lame à faces parallèles dont les faces externes sont totalement réfléchissantes.

**Claims**

1. An optical switching element comprising two light waveguides ($G_1$, $G_2$) which are parallel over a length called coupling length (1), whose opposite walls are separated by a small distance (d) called coupling distance, said light waveguides ($G_1$, $G_2$) each being constituted by a ribbon of a semiconductor material having a first refractive index ($n_g$) formed on a semiconductor substrate (1) of a material having a second, lower refractive index ($n_{s)}$ such that the light is confined in the ribbon constituting the waveguide, the dimensions of said waveguides being such that they each transport a monomode wave and the switching operation being initiated by the effect of the potentials to which polarization means applied to the waveguides are brought, the ribbon forming one of the waveguides called first light waveguide ($G_1$) being realized in a first uniform layer on the substrate, which ribbon forming said first light waveguide ($G_1$) is covered by a uniform layer of a compatible semiconductor material, which is called intermediate layer (1), whose refractive index is lower than that of the waveguides, whose thickness is so designed as to form the coupling distance between the two light waveguides, while the ribbon forming the other waveguide or second light waveguide ($G_2$) is formed in another uniform layer at the surface of the intermediate layer (I), the effect of the potentials to which the polarization means applied to the waveguides are brought causing the light introduced into one of the waveguides parallel to its optical axis at a first distance from the substrate to be propagated in the other waveguide parallel to the optical axis of the latter at a second distance from the substrate, whereby the assembly formed by the first or lower waveguide ($G_1$) with the second or upper waveguide ($G_2$) and with the intermediate layer (I) constitutes a first superimposed structure ($S_1$) whose longitudinal dimension is equal to the coupling length (1), characterized in that a flat mirror ($M_1$), the so-called first mirror, is arranged in the path of the beam transported by the second light waveguide ($G_2$) of the first superimposed structure ($S_1$) at the end of this structure, at right angles to the substrate and enclosing with the optical axis of this second waveguide an angle different from the perpendicular, and in that a third light waveguide ($G_3$) constituted by a ribbon identical to that constituting the second waveguide transports the beam originating from this second waveguide and reflected by the mirror at the same distance from the substrate as the second waveguide.

2. A switching element as claimed in Claim 1, characterized in that a fourth light waveguide ($G_4$) forms with an intermediate (I) layer and the third light waveguide ($G_3$) a so-called second superimposed structure ($S'_1$), identical to the first superimposed structure ($S_1$), in which the fourth waveguide ($G_4$) is the lower waveguide and the third waveguide ($G_3$) is the upper waveguide, and in that this second superimposed structure ($S'_1$) is provided with polarization means identical to those of the first superimposed structure (S,).

3. A switching element as claimed in Claim 2, characterized in that a flat mirror ($M_2$), the second mirror, parallel to the first mirror ($M_1$) and having a similar structure, is arranged in the path of the beam of the upper waveguide ($G_3$) of the second superimposed structure ($S'_1$) at the end of this structure.

4. A switching element as claimed in Claim 3, characterized in that the layers (7, 9) forming the waveguides and all of the intermediate layers (8) are epitaxial layers formed on a monocrystalline substrate (1).

5. A switching element as claimed in Claim 4, characterized in that the plane of the substrate on which the waveguides are formed is the (100) plane, in that the waveguides are formed parallel to the crystallographic axes [110] or [1$\overline{1}$0], and in that each of the mirrors ($M_1$, $M_2$) is formed according to a crystallographic surface (010) or (001).

6. A switching element as claimed in Claim 5, characterized in that it is obtained by etching in the surface of the substrate (1) grooves (6) having the depth of each of the superimposed structures, in the sites destined for the latter, and by epitaxial growth of the layers (7, 8, 9) forming the superimposed structures in said grooves (6), followed by an etching of one of the grooves (6) having the depth (e) of the first waveguide ($G_1$) in such a manner that the lateral faces of these grooves (6) constitute the surfaces of the mirrors ($M_1$, $M_2$, being orientated according to the suitable angle with respect to the optical axis of the waveguides.

7. A switching element as claimed in any one of the Claims 3 to 6, characterized in that the substrate and each of the intermediate layers (I) consist of $n^+$-type gallium arsenide (GaAs), in that the waveguides ($G_1$, $G_2$, $G_3$, $G_4$) consist of $n^-$ type gallium arsenide (GaAs), and in that the polarization means are constituted for each of the superimposed structures ($S_1$, $S'_1$) by a first electrode (12) of the Schottky type with its contact provided on the upper waveguide, and by an electrode (100) of the ohmic contact type provided on the substrate (1) or on the intermediate layer (I), a potential difference then being applied between this electrode (12) of the Schottky type and said ohmic contact (100).

8. A switching element as claimed in any one of Claims 3 to 6, characterized in that the substrate consists of $n^+$-type gallium arsenide (GaAs), in that the waveguides ($G_1$, $G_2$, $G_3$, $G_4$) consist of $n^-$-type gallium arsenide (GaAs), in that each of the intermediate layers (I) consists of $n^-$-type gallium-aluminium arsenide (GaA1As), and in that the polarization means are constituted for each of the superimposed structures by a first electrode (100) of the ohmic contact type provided on the substrate and by a second electrode (12) of the Schottky type provided on the upper waveguide, a potential difference being applied between said two electrodes.

9. A switching element as claimed in any one of the Claims 3 to 6, characterized in that the substrate (1) consists of $n^+$-type gallium arsenide (GaAs), the waveguides consist of $n^-$-type gallium arsenide (GaAs) and the intermediate layer (I) consists of $p^+$-type gallium arsenide (GaAs), in that the upper waveguide (G2) is further covered by a layer (2) of $n^+$-type gallium arsenide (GaAs), and in that the polarization means are constituted for each of the superimposed structures by a first electrode (21) of the ohmic contact type provided on the intermediate layer (I) and brought to a reference potential, by a second electrode (100) of the ohmic contact type provided on the substrate (1), and by a third electrode (22) of the ohmic contact type provided on the upper layer (2) of $n^+$-type gallium arsenide, symmetrical potential differences being applied between the second (100) and the first (21) electrode on the one hand, or between the third (22) and the first (21) electrode on the other hand, according to the desired switching direction.

10. A switching element as claimed in any one of the Claims 3 to 6, characterized in that the substrate (1) and each of the intermediate layers consist of $n^+$-type indium phosphide (InP), in that the waveguides consist of $n^-$-type indium phosphide (InP), and in that the polarization means are constituted for each of the superimposed structures by an ohmic contact (100, 21) provided on the intermediate layer (I) or the substrate (1), and by a contact (23) of the MIS type (Metal-Insulator-Semiconductor), a potential difference being applied between said two electrodes.

11. An optical switching matrix comprising a number n of inputs $IN_1, IN_2 ... IN_n$ and a number n of outputs $O_1$, O2, ... $O_n$, between which the switching operations are effected, characterized in that it is formed by n x n switching elements ($S_1$, $S'_1$) as claimed in any one of the Claims 3 to 10, and in that these elements are juxtaposed in such a manner that the columns of the matrix in line with its inputs $IN_1, IN_2 ...$ $IN_n$ are formed by the said first structures ($S_{11}$, $S'_{12}, ... S_{1n}$, $S_{21}$, $S_{22} ... S_{2n}$, $S_{n1}$, $S_{n2}$, $...S_{nn}$) of the elements, whose lower waveguides are in line with each other, and in such a manner that the lines of the matrix in line with its outputs ($O_1$, $O_2$, ... $O_n$) are formed by the said second structures ($S'_{11}$, $S'_{12}$, ... $S'_{1n}'$, $2'_{21}$, $S'_{22}$, ... $S'_{2n}$, $S'_{n1}$, $S'_{n2}$, ... $S'_{nn}$) of the elements, whose lower waveguides are in line with each other, the said first mirror of one element forming with the said second mirror of another juxtaposed element a plane-parallel plate, whose external surfaces are totally reflecting.

## Patentansprüche

1. Optisches Schaltelement mit zwei über eine als Kopplungslänge (L) bezeichnete Länge parallelen Lichtwellenleitern (G1, G2), deren gegenüberliegende Wände durch einen kleinen, als Kopplungsabstand bezeichneten Abstand (d) getrennt sind, wobei jeder dieser Lichtwellenleiter (G1, G2) aus einem Streifen aus einem Halbleitermaterial mit einer ersten Brechzahl ($n_g$) besteht, der auf einem Halbleitersubstrat (1) aus einem Material mit einer zweiten, kleineren Brechzahl ($n_s$) - erzeugt wird, so daß das Licht in dem den Wellenleiter bildenden Streifen eingeschlossen ist, wobei die Abmessungen dieser Wellenleiter so sind, daß jeder der Wellenleiter eine Monomode-Welle überträgt und der Schaltvorgang durch den Effekt der Potentiale, auf denen auf den Wellenleitern angebrachte Polarisationsmittel liegen, ausgelöst wird, und wobei der einen der, als erster Lichtwellenleiter (G1) bezeichneten Wellenleiter bildende Streifen als erste uniforme Schicht auf dem Substrat (1) erzeugt wird und dieser Streifen, der diesen ersten Wellenleiter (G1) bildet, von einer uniformen, als Zwischenschicht (I) bezeichneten Schicht aus kompatiblem Halbleitermaterial, das eine kleinere Brechzahl als die Wellenleiter und eine zur Bildung des Kopplungsabstandes zwischen den beiden Lichtwellenleitern geeignete Dicke hat, bedeckt ist, und wobei der den anderen, als zweiter Lichtwellenleiter (G2) bezeichneten Wellenleiter bildende Streifen als eine weitere uniforme Schicht an der Oberfläche der Zwischenschicht (I) erzeugt wird, und wobei das in einen der Wellenleiter parallel zu seiner optischen Achse in einem ersten Abstand zum Substrat eingebrachte Licht durch den Effekt der Potentiale, auf denen die auf den Wellenleitern angebrachten Polarisationsmittel liegen, veranlaßt wird, sich in dem anderen Wellenleiter parallel zu dessen optischer Achse in einem zweiten Abstand zum Substrat fortzupflanzen, wobei die Gesamtheit des ersten, als unterer Wellenleiter bezeichneten Wellenleiters (G1) mit dem zweiten, als oberer Wellenleiter bezeichneten Wellenleiter (G2) und der Zwischenschicht (I) eine als erste Stapelstruktur (S1) bezeichnete Struktur bildet, deren Längsabmessung gleich der Kopplungslänge (I) ist, dadurch gekennzeichnet, daß ein als erster Spiegel bezeichneter Planspiegel (M1) sich im Weg des von dem zweiten Lichtwellenleiter (G2) der ersten Stapelstruktur (S1) an das Ende dieser Struktur übertragenen Bündels senkrecht zum Substrat und unter einem zur optischen Achse dieses zweiten Wellenleiters von der Normalen abweichenden Winkel befindet, und daß ein dritter, von einem mit dem den zweiten Wellenleiter bildenden Streifen identischen Streifen gebildeter Lichtwellenleiter (G3) das von diesem zweiten Wellenleiter stammende und von dem Spiegel reflektierte Bündel im gleichen

EP 0 209 190 B1

Abstand zum Substrat wie dieser zweite Wellenleiter überträgt.

2.  Schaltelement nach Anspruch 1, dadurch gekennzeichnet, daß ein vierter Lichtwellenleiter ($G_4$) mit einer Zwischenschicht (I) und dem dritten Lichtwellenleiter ($G_3$) eine als zweite Stapelstruktur ($S_1'$) bezeichnete Struktur bildet, die mit der ersten Stapelstruktur ($S_1$) identisch ist und in der der vierte Wellenleiter ($G_4$) der untere Wellenleiter und der dritte Wellenleiter ($G_3$) der obere Wellenleiter ist, und daß diese zweite Stapelstruktur ($S_1'$) mit Polarisationsmitteln versehen ist, die mit denen der ersten Stapelstruktur ($S_1$) identisch sind.

3.  Schaltelement nach Anspruch 2, dadurch gekennzeichnet, daß ein als zweiter Spiegel bezeichneter, parallel zum ersten Spiegel ($M_1$) angeordneter Planspiegel ($M_2$) von identischem Aufbau sich im Weg des Bündels des oberen Wellenleiters ($G_3$) der zweiten Stapelstruktur ($S_1'$) am Ende dieser Struktur befindet.

4.  Schaltelement nach Anspruch 3, dadurch gekennzeichnet, daß die die Wellenleiter bildenden Schichten (7, 9) und jede der Zwischenschichten (8) Epitaxieschichten sind, die auf einem monokristallinen Substrat (1) gebildet sind.

5.  Schaltelement nach Anspruch 4, dadurch gekennzeichnet, daß die Ebene des Substrats, auf dem die Wellenleiter verwirklicht sind, die (100)-Ebene ist, und daß die Wellenleiter parallel zu den kristallographischen Achsen [110] oder [1$\overline{1}$0] verwirklicht sind, und daß jeder der Spiegel ($M_1$, $M_2$) entsprechend einer kristallographischen Ebene (010) oder (001) verwirklicht ist.

6.  Schaltelement nach Anspruch 5, dadurch gekennzeichnet, daß es auf der Ebene des Substrats (1) durch Ätzen von Gräben (6) mit einer jeder der Stapelstrukturen entsprechenden Tiefe am Ort dieser Strukturen erzeugt wird, mit anschließend epitaxialem Wachstum der die Stapelung in den Gräben (6) bildenden Schichten (7, 8, 9), gefolgt von einer Ätzung einer der Gräben (6) mit der Tiefe (e) des ersten Wellenleiters ($G_1$) in der Weise, daß die Seitenflächen dieser Gräben (6) die Ebenen der Spiegel ($M_1$, $M_2$) bilden und diese Ebenen im geeigneten Winkel bezüglich der optischen Achse der Wellenleiter ausgerichtet sind.

7.  Schaltelement nach einem der Ansprüche 3 bis 6, dadurch gekennzeichnet, daß das Substrat, ebenso wie jede der Zwischenschichten (I), aus $n^+$-Galliumarsenid (GaAs) ist, und daß die Wellenleiter ($G_1$, $G_2$, $G_3$, $G_4$) aus $n^-$-Galliumarsenid (GaAs) sind, und daß die Polarisationsmittel für jede der Stapelstrukturen ($S_1$, $S_2$) aus einer ersten Schottky-Elektrode (12) mit dem Kontakt auf dem oberen Wellenleiter und einer Elektrode (100) als Ohmscher Kontakt auf dem Substrat (1) oder auf der Zwischenschicht (I) bestehen, wobei eine Potentialdifferenz zwischen dieser Schottky-Elektrode (12) und dem Ohmschen Kontakt (100) angelegt ist.

8.  Schaltelement nach einem der Ansprüche 3 bis 6, dadurch gekennzeichnet, daß das Substrat aus $n^+$-Galliumarsenid (GaAs) ist, und daß die Wellenleiter ($G_1$, $G_2$, $G_3$, $G_4$) aus $n^-$-Galliumarsenid sind und jede der Zwischenschichten (I) aus $n^-$-Galliumaluminiumarsenid (GaA1As) ist, und daß die Polarisationsmittel für jede der Stapelstrukturen aus einer ersten Elektrode (100) als Ohmscher Kontakt auf dem Substrat und einer zweiten Schottky-Elektrode (12) mit dem Kontakt auf dem oberen Wellenleiter bestehen, wobei eine Potentialdifferenz zwischen diesen beiden Elektroden angelegt ist.

9.  Schaltelement nach einem der Ansprüche 3 bis 6, dadurch gekennzeichnet, daß das Substrat (1) aus $n^+$-Galliumarsenid (GaAs) ist, und die Wellenleiter aus $n^-$-Gailiumarsenid (GaAs) sind und die Zwischenschicht (I) aus $p^+$-Galliumarsenid (GaAs) ist, und daß der obere Wellenleiter ($G_2$) noch von einer Schicht (2) aus $n^+$-Galliumarsenid (GaAs) überdeckt ist, und daß die Polarisationsmittel für jede der Stapelstrukturen aus einer ersten Elektrode (21) als Ohmscher Kontakt auf der Zwischenschicht, welche Elektrode auf ein Bezugspotential gebracht ist, aus einer zweiten Elektrode (100) als Ohmscher Kontakt auf dem Substrat (1), und einer dritten Elektrode (22) als Ohmscher Kontakt in der oberen Schicht (2) aus n + -Galliumarsenid bestehen, wobei symmetrische Potentialdifferenzen zwischen der zweiten (100) und der ersten Elektrode (21) einerseits und zwischen der dritten (22) und der ersten Elektrode (21) andererseits angelegt sind, entsprechend der Richtung des gewünschten Schaltvorgangs.

10. Schaltelement nach einem der Ansprüche 3 bis 6, dadurch gekennzeichnet, daß das Substrat (1), ebenso wie jede der Zwischenschichten (I), aus n$^+$-Indiumphosphid (InP) ist, und daß die Wellenleiter aus n$^-$-Indiumphosphid (InP) sind, und daß die Polarisationsmittel für jede der Stapelstrukturen aus einem Ohmschen Kontakt (100; 21) auf der Zwischenschicht (I) oder auf dem Substrat (1) und einem MIS-Kontakt (23) (MIS: Metal Insulator Semiconductor; d.h. Metall-Isolator-Halbleiter) bestehen, wobei eine Potentialdifferenz zwischen diesen beiden Elektroden angelegt ist.

11. Optische Schaltmatrix mit n Eingängen $IN_1$, $IN_2$, ..., $IN_n$ und n Ausgängen $O_1$, $O_2$, ..., $O_n$, zwischen denen der Schaltvorgang stattfindet, dadurch gekennzeichnet, daß sie aus nxn Schaltelementen ($S_1$, $S_1'$) nach einem der Ansprüche 3 bis 10 gebildet ist, und daß diese Elemente in einer solchen Weise nebeneinander angeordnet sind, daß die Spalten der Matrix, die in einer Linie mit deren Eingängen $IN_1$, $IN_2$, ... , $IN_n$ liegen, von den ersten Strukturen $S_{11}$, $S_{12}$, ..., $S_{1n}$, $S_{21}$, ....$S_{n1}$, $S_{n2}$, ..., $S_{nn}$ der Elemente gebildet werden, deren untere Wellenleiter in einer Linie zueinander liegen, und so, daß die Zeilen der Matrix, die in einer Linie mit deren Ausgängen $O_1$, $O_2$, ..., $O_n$ liegen, von den zweiten Strukturen $S_{11}'$, $S_{12}'$, ..., $S_{1n}'$, $S_{21}'$, ...,$S_{n1}'$, $S_{n2}'$, ..., $S_{nn}'$ der Elemente gebildet werden, deren untere Wellenleiter in einer Linie zueinander liegen, wobei der erste Spiegel eines Elements mit dem zweiten Spiegel eines anderen daneben liegenden Elements ein planparalleles Plättchen bildet, deren äußere Flächen totalreflektierend sind.

FIG.1a

FIG.1d

FIG.1b

FIG.1c

$G_2$ (Ga As, $n^-$)

I (GaAs, $n^+$)

$G_1$ (GaAs, $n^-$)

1 (Ga As, $n^+$)

FIG.2a

$G_2$ (GaAs, $n^-$)

I (Ga Al As, $n^-$)

$G_1$ (GaAs, $n^-$)

1 (GaAs, $n^+$)

FIG.2b

(Ga As, $n^+$)

$G_2$ (GaAs, $n^-$)

I (GaAs, $p^+$)

$G_1$ (GaAs, $n^-$)

1 (GaAs, $n^+$)

FIG.2c

MIS

$G_2$ (InP, $n^-$)

I (InP, $n^+$)

$G_1$ (InP, $n^-$)

1 (InP, $n^+$)

FIG.2d

FIG.3

FIG.4a

FIG.4b

FIG.4c

FIG.4d

FIG.4e

FIG.4f

FIG.4g